# EUROPEAN PATENT APPLICATION

(11) **EP 0 633 219 A1**
(43) Date of publication of application: **11.01.1995**
(21) Application number: 93201969.8
(22) Date of filing: 06.07.1993
(51) Int. Cl.: C01B 17/04, B01D 53/34

(54) **Process for removing sulphur compounds from a gas stream**

(71) Applicant: SHELL INTERNATIONALE RESEARCH MAATSCHAPPIJ B.V., NL-2596 HR Den Haag (NL)
(72) Inventor: van den Brink, Peter John, NL-1031 CM Amsterdam (NL)

(57) **Abstract**

Process for removing sulphur compounds from a gas stream (2) comprising the steps of (a) converting the sulphur compounds to sulphuric acid (1, 5); (b) separating the sulphuric acid from the gas stream (8), and (c) supplying the sulphuric acid (16) into the thermal stage (18) of a Claus process to allow the sulphuric acid to react with hydrogen sulphide to elemental sulphur.

## Description

The present invention relates to a process for removing sulphur compounds from a gas stream containing sulphur compounds for example hydrogen sulphide and/or sulphur dioxide.

Such a gas stream is for example the off-gas from a Claus process, which is a process for manufacturing elemental sulphur from hydrogen sulphide. The Claus process comprises two stages: a thermal stage and a catalytic stage. In the thermal stage part of the hydrogen sulphide is oxidized to sulphur dioxide and the remainder of the hydrogen sulphide is allowed to react with the sulphur dioxide to elemental sulphur. As in the thermal stage not all hydrogen sulphide and sulphur dioxide will react, the thermal stage is followed by the catalytic stage in which the remaining hydrogen sulphide reacts with sulphur dioxide to elemental sulphur. As the reaction to elemental sulphur is an equilibrium reaction, the conversion is not complete and the off-gas from the Claus process will include small amounts hydrogen sulphide and sulphur dioxide.

Examples of gas streams containing as sulphur compounds only sulphur dioxide are flue gas from a furnace and off-gas from a regenerator of a fluidized catalytic cracking process.

The sulphur compounds in the gas stream may further include organic sulphur compounds such as carbonyl sulphide, carbon disulphide and mercaptans.

In the article "SNPA's process for H₂SO₄ production developed with eye on air pollution" by G L Guyot and J P Zwilling, The Oil and Gas Journal, 21 November 1966, pages 198-200 is disclosed a process for removing sulphur compounds from the off-gas of a Claus process, which process comprises converting the sulphur compounds via sulphur trioxide to sulphuric acid and separating the sulphuric acid from the gas stream.

The formed sulphuric acid is a salable product.

Applicant now proposes to improve the known process. To this end the process for removing sulphur compounds from a gas stream according to the present invention comprises the steps of (a) converting the sulphur compounds to sulphuric acid; (b) separating the sulphuric acid from the gas stream, and (c) allowing sulphuric acid to react with hydrogen sulphide to elemental sulphur.

In the process of the present invention the sulphuric acid is not removed as a salable product, in stead formed sulphuric acid is removed by allowing it to react with hydrogen sulphide to elemental sulphur.

Suitably all sulphuric acid is allowed to react with hydrogen sulphide to elemental sulphur.

The reaction between sulphuric acid and hydrogen sulphide is suitably carried out at elevated temperature.

Suitably this reaction is carried out in a Claus process. The sulphuric acid can be supplied to any stage of the Claus process, however, in order to avoid corrosion problems the sulphuric acid is best supplied into the thermal stage of the Claus process. A further advantage of supplying sulphuric acid into the thermal stage of the Claus process is that under the conditions in the burner sulphuric acid will decompose in sulphur dioxide, water and oxygen which facilitates the conversion to elemental sulphur.

To reduce the amount of water which is returned to the Claus process, the step of separating the sulphuric acid from the gas stream suitably comprises concentrating the sulphuric acid, and separating the concentrated sulphuric acid from the gas stream. The concentrated sulphuric acid is then allowed to react with hydrogen sulphide to elemental sulphur.

The invention will now be described by way of example in more detail with reference to the accompanying drawing showing schematic cally a process line-up for the process of the present invention.

A gas stream comprising sulphur compounds which have to be removed is supplied to incinerator 1 through conduit 2, and oxygen is supplied to the incinerator 1 through conduit 3. Sulphur compounds other than sulphur dioxide are oxidized to sulphur dioxide, and a gas stream containing sulphur dioxide is passed through conduit 4 to reactor 5 where sulphur dioxide is catalytically oxidized to sulphur trioxide. To this end reactor 5 is filled with a suitable catalyst, for example a vanadium pentoxide catalyst as described in French patent specification No. 1 357 675. The amount of free oxygen supplied through conduit 3 is sufficient to get the required conversion to sulphur trioxide.

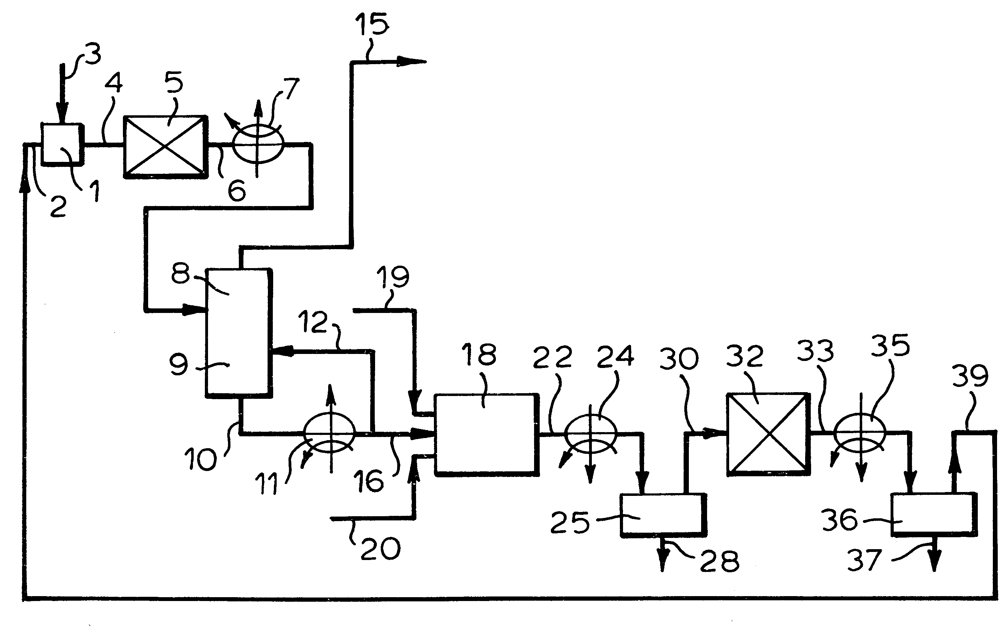

The sulphur trioxide forms with the water in the gas stream sulphuric acid, so that the sulphur compounds are converted to sulphuric acid via the intermediate sulphur trioxide. The formed sulphuric acid is subsequently separated from the gas stream by condensing and stripping. To this end the gas stream leaving reactor 5 through conduit 6 is cooled in heat exchanger 7 and a mixture of gas and liquid is supplied to column 8. A bottom stream rich in sulphuric acid is withdrawn from column 8 through conduit 10. The bottom stream is heated in reboiler 11, and vapour from the bottom stream is supplied through conduit 12 to the stripper section 9 in the lower part of column 8 to strip the liquid in the stripper section 9. A gaseous overhead substantially free from sulphur compounds and rich in water is withdrawn from the column 8 through conduit 15. The column 8 may furthermore be provided with an absorption section which absorption section is located above the stripper section 9 as shown in figure 1 of the article "Sulphuric acid production from lean H₂S-containing gases" by P Schoubye, Sulphur No. 137, July/August 1978.

The liquid part of the bottom stream is supplied through conduit 16 to burner 18 which is the thermal stage of a Claus process. To the burner 18 is furthermore supplied a gas stream containing hydrogen sulphide through conduit 19 and oxygen through conduit 20. Part of the hydrogen sulphide is oxidized in the burner 18 to sulphur dioxide. The sulphuric acid provided through conduit 16 and the formed sulphur dioxide react with the remaining hydrogen sulphide to elemental sulphur, this reaction starts in the burner 18. The effluent from the burner 18 is supplied through conduit 22 via condensor 24 to a storage tank 25. Condensed elemental sulphur is withdrawn from the storage tank 25 through conduit 28 and the uncondensed part of the effluent from the burner 18 is supplied to the catalytic stage of the Claus process through conduit 30 which is provided with an in-line heater (not shown).

The catalytic stage of the Claus process comprises a reactor 32 containing an activated alumina catalyst. The effluent leaves the reactor 32 through conduit 33. The effluent is condensed in condensor 35 and supplied to storage tank 36. Condensed elemental sulphur is withdrawn from storage tank 36 through conduit 37 and the uncondensed part of the effluent from the reactor 32 is removed through conduit 39.

The uncondensed part of the effluent from the reactor 32 is the Claus off-gas and it contains small amounts of hydrogen sulphide and sulphur dioxide. This off-gas is passed through conduit 39 to conduit 2 which opens into the incinerator 1, and thus the off-gas is the gas stream from which sulphur compounds have to be removed.

The amount of sulphuric acid that is formed is proportional to the amount of sulphur compounds in the off-gas, and the amount of sulphur compounds in the off-gas of the Claus process can be reduced by adding a second reactor in the catalytic stage. Consequently adding a second reactor will reduce the amount of sulphuric to be handled in the burner 18.

The amount of sulphur compounds in the off-gas from the second reactor of the Claus process can be reduced by a further treatment. An example is of a Claus process including this further treatment is the Superclaus process as described in the article "Superclaus: performance world-wide" by B G Goar, J A Lagas, J Borsboom, G Heijkoop, Sulphur No. 220, May/June 1992. In the Superclaus process the thermal stage of the Claus process is operated under oxygen-deficient conditions so that the gas stream from the second reactor contains a surplus of hydrogen sulphide, this gas stream is reheated and mixed with air and contacted with a special catalyst in a third reactor. Elemental sulphur is removed from the gas stream leaving the third reactor, and the off-gas from the third reactor is supplied to the incinerator 1. The sulphuric acid-containing stream from the column 8 is then supplied to the thermal stage of the Superclaus process.

In the above examples the gas stream containing sulphur compounds is the off-gas from a Claus process or from a Superclaus process. The gas stream may further be flue gas from a furnace or off-gas from a regenerator of a fluidized catalytic cracking process. It will be understood that these latter gas streams may be mixed with off-gas from a Claus process or from a Superclaus process to form the gas stream that is treated with the process of the invention.

The incinerator may also be a catalytic incinerator as described in the article "Sulphuric acid production from lean H₂S-containing gases" by P Schoubye, Sulphur No. 137, July/August 1978.

## Claims

1. Process for removing sulphur compounds from a gas stream comprising the steps of (a) converting the sulphur compounds to sulphuric acid; (b) separating the sulphuric acid from the gas stream, and (c) allowing sulphuric acid to react with hydrogen sulphide to elemental sulphur.

2. Process as claimed in claim 1, wherein step (c) comprises supplying the sulphuric acid into the thermal stage of a Claus process.

3. Process as claimed in claim 1 or 2, wherein step (b) comprises concentrating the sulphuric acid and separating the concentrated sulphuric acid from the gas stream.

4. Process as claimed in claim 2 or 3, wherein the gas stream comprises the off-gas of the Claus process.
